# EUROPEAN PATENT APPLICATION

(11) **EP 4 597 751 A1**
(43) Date of publication of application: **06.08.2025**
(21) Application number: 23947292.1
(22) Date of filing: 20.10.2023
(51) Int. Cl.: H01Q 13/20

(54) **LEAKY CABLE**

(30) Priority: 31.07.2023 CN 202310942882
(71) Applicant: Zhongtian Radio Frequency Cable Co., Ltd., Nantong, Jiangsu 226000 (CN); Jiangsu Zhongtian Technology Co., Ltd., Nantong, Jiangsu 226000 (CN)
(72) Inventor: SHA, Min, Nantong, Jiangsu 226000 (CN); XU, Bohua, Nantong, Jiangsu 226000 (CN); WANG, Bin, Nantong, Jiangsu 226000 (CN); ZHAO, Ruijing, Nantong, Jiangsu 226000 (CN); LIU, Fang, Nantong, Jiangsu 226000 (CN); XU, Zongming, Nantong, Jiangsu 226000 (CN); SONG, Hao, Nantong, Jiangsu 226000 (CN)
(74) Representative: Range, Christopher William
(86) International application number: PCT/CN2023/125754
(87) International publication number: WO 2025/025353

(57) **Abstract**

The present application relates to the technical field of cables, and in particular to a leaky cable. The present application aims to solve the problem of poor structural stability of an outer conductor layer in a related leaky cable. According to the leaky cable in the present application, an outer conductor layer comprises a slot portion, a first connecting portion, and a second connecting portion; a first knurled pattern is provided on the first connecting portion in a rolling manner, a second knurled pattern is provided on the second connecting portion in a rolling manner, and a third knurled pattern is provided on the slot portion in a rolling manner; the first connecting portion and the second connecting portion are at least partially attached, and in the attached area, the crest of the first knurled pattern corresponds to the crest of the second knurled pattern, and the trough of the first knurled pattern corresponds to the trough of the second knurled pattern, so that the first connecting portion and the second connecting portion are not prone to loosening or separating after being lap-jointed, improving the structural stability of the outer conductor layer. **In** addition, the bending performance of the first connecting portion and the second connecting portion is smaller than that of the slot portion, so that circumferential torsional deformation of the leaky cable in the laying process is avoided, and thus the outer conductor layer has a relatively stable structure.

## Description

The present application claims priority from the Chinese Patent Application No. 202310942882.2 filed with China National Intellectual Property Administration on July 31, 2023 and entitled as "Leaky Cable", the entire content of which is incorporated by reference in the present application.

### Technical Field

Examples of the present application relate to technical field of cables, and in particular to a leaky cable.

### Background Art

In the current field of wireless signal coverage, leaky cables are often used to achieve wireless signal coverage in indoor scenes.

In the related technology, the leaky cable includes an inner conductor, an insulating layer, an outer conductor layer and an outer sheath which are sequentially arranged from the inside to the outside. The outer conductor layer is provided with repeating slots or gaps. While the electromagnetic wave is transmitted longitudinally in the leaky cable, it radiates electromagnetic waves to the outside through the slots or gaps. The field intensity of the electromagnetic wave is attenuated more evenly without fluctuations, so the electromagnetic wave can be easily received by the receiving device; the external electromagnetic field can also be induced into the leaky cable through the slots and transmitted to the receiving end.

However, the structural stability of the outer conductor layer in the related leaky cable is poor.

### Summary of the Invention

In view of this, the main object of examples of the present application is to provide a leaky cable, so as to solve the technical problem of poor structural stability of the outer conductor layer in the related leaky cable.

To achieve the above object, an example of the present application provides a leaky cable, comprising an inner conductor, an insulating layer, an outer conductor layer and an outer sheath, wherein the inner conductor, the insulating layer, the outer conductor layer and the outer sheath are arranged in sequence from the inside to the outside; the outer conductor layer includes a slot portion, a first connecting portion and a second connecting portion; the slot portion, the first connecting portion and the second connecting portion are integrally provided, the first connecting portion, the slot portion and the second connecting portion are sequentially connected along the circumference of the leaky cable and wound into a tubular shape, so as to be jointly arranged outside the insulating layer; the slot portion is provided with slots, the first connecting portion is provided with a first knurling by rolling and the second connecting portion is provided with a second knurling by rolling; the first connecting portion and the second connecting portion are at least partially fitted, and in the fitted area, the crest of the first knurling corresponds to the crest of the second knurling, and the trough of the first knurling corresponds to the trough of the second knurling; the slot portion is provided with a plurality of third knurling by rolling, and the third knurling is different from the first knurling and the second knurling in knurling patterns, so that the bending performance of the slot portion is greater than the bending performance of the first connecting portion, and the bending performance of the slot portion is greater than the bending performance of the second connecting portion.

In some examples that may include the above example, the first knurling and the second knurling have the same knurling patterns.

In some examples that may include the above examples, the first knurling and the second knurling are both crossed knurling and the third knurling has an elongated strip shape; the third knurling extends along the circumference of the leaky cable, and the plurality of third knurling is arranged in sequence along the axial direction of the leaky cable.

In some examples that may include the above examples, the first knurling includes at least one of a crossed knurling, a herringbone knurling, and a star-shape knurling; the second knurling includes at least one of a crossed knurling, a herringbone knurling, and a star-shape knurling; and the third knurling includes at least one of a V-shaped knurling and a wavy knurling.

In some examples that may include the above examples, the outer conductor layer includes an aluminum strip, which is formed of the slot portion, the first connecting portion, and the second connecting portion.

In some examples that may include the above examples, a conductive layer is coated on the side of the aluminum strip facing the insulating layer and/or the side of the aluminum strip away from the insulating layer.

In some examples that may include the above examples, the conductive layer includes a graphene layer and/or a copper layer.

In some examples that may include the above examples, the conductive layer includes a graphene layer and a copper layer, and the graphene layer and the copper layer are both coated on the surface of the aluminum strip.

In some examples that may include the above examples, the copper layer is coated on two axial ends of the aluminum strip.

In some examples that may include the above examples, the slot is in an elongated strip shape, and there is an included angle between the extending direction of the slot and the extending direction of the third knurling.

In some examples that may include the above examples, along the circumference of the leaky cable, there is a first preset interval between an end of the slot close to the first connecting portion and the first connecting portion; there is a second preset interval between an end of the slot close to the second connecting portion and the second connecting portion.

The leaky cable provided in the examples of the present application comprises an inner conductor, an insulating layer, an outer conductor layer and an outer sheath, wherein the inner conductor, the insulating layer, the outer conductor layer and the outer sheath are arranged in sequence from the inside to the outside; the outer conductor layer comprises a slot portion, a first connecting portion and a second connecting portion; the slot portion, the first connecting portion and the second connecting portion are integrally provided; the first connecting portion, the slot portion and the second connecting portion are sequentially connected along the circumference of the leaky cable and wound into a tubular shape, so as to be jointly surrounded on the outside of the insulating layer; the slot portion is provided with slots, the first connecting portion is provided with a first knurling by rolling and the second connecting portion is provided with a second knurling by rolling; the first connecting portion and the second connecting portion are at least partially fitted, and in the fitted area, the crest of the first knurling corresponds to the crest of the second knurling, and the trough of the first knurling corresponds to the trough of the second knurling, which function to clamp the first connecting portion and the second connecting portion, so that the first connecting portion and the second connecting portion are not prone to loosening or separating after overlapping and the structural stability of the outer conductor layer is improved. In addition, compared with the overlap of the first connecting portion and the second connecting portion which are smooth, the first knurling and the second knurling can increase the friction force of the first connecting portion and the second connecting portion at the overlap position, so that the outer conductor layer is not prone to loosening after the outer sheath is peeled off, which improves the structural stability of the outer conductor layer. Moreover, since the third knurling pressed on the slot portion is different from the first knurling and the second knurling in knurling patterns, the bending performance of the first connecting portion and the bending performance of the second connecting portion are smaller than the bending performance of the slot portion, so that the circumferential torsional deformation of the leaky cable during the laying process is avoided, further allowing the outer conductor layer to form a relatively stable structure.

### Brief Description of Drawings

In order to more clearly illustrate the technical solutions in the examples of the present application or the prior art, drawings required for describing the examples or the prior art are briefly introduced in the following. Apparently, drawings in the following description are some examples of the present application, and those of ordinary skills in the art can obtain other drawings based on these drawings without expending creative work.
FIG. 1 is a first structural schematic diagram of the leaky cable provided in an example of the present application;
FIG. 2 is a cross-sectional view along the A-A direction in Fig. 1;
FIG. 3 is a structural schematic diagram of the outer conductor layer in the leaky cable provided in an example of the present application when it is unfolded;
FIG. 4 is a second structural schematic diagram of the leaky cable provided in the example of the present application;
FIG. 5 is a first structural schematic diagram of the outer conductor layer in the leaky cable provided in the example of the present application;
FIG. 6 is a second structural schematic diagram of the outer conductor layer in the leaky cable provided in the example of the present application.

Description of reference numerals:
10 - inner conductor;
20 - insulating layer;
30 - outer conductor layer;
40 - outer sheath;
310 - slot portion;
311 - slot;
312 - third knurling;
320 - first connecting portion;
321 - first knurling;
330 - second connecting portion;
331 - second knurling.

### Embodiments

Firstly, it should be understood by those skilled in the art that those embodiments are only used to explain the technical principles of the present application and are not intended to limit the protection scope of the present application. Those skilled in the art can make adjustments to them as needed, so as to adapt to specific application scenarios.

Secondly, it should be noted that in the description of the examples of the present application, terms used to indicate directions or positional relationships, such as "inside" and "outside", are based on the directions or positional relationships shown in the drawings. This is only for the convenience of description, and does not indicate or imply that the device or component must have a specific orientation, be constructed and operated in a specific orientation, and therefore cannot be understood as a limitation on the present application.

In addition, it should be noted that in the description of the examples of the present application, unless otherwise clearly specified and defined, the terms "connected" and "connection" should be understood in a broad sense, for example, it can be a fixed connection, a detachable connection, or an integral connection; it can be a mechanical connection or an electrical connection; it can be direct connection, or indirect connection through an intermediate medium, or it can be the internal connection of two components. For those skilled in the art, the specific meanings of the above terms in the examples of the present application can be understood according to the specific circumstances.

In order to make the object, technical solution and advantages of the examples of the present application clearer, the technical solution in the examples of the present application will be clearly and completely described with reference to the drawings in the examples of the present application. Obviously, the described examples are partial examples of the present application, not all of the examples. Based on the examples in the present application, all other examples obtained by those having ordinary skills in the art without expending creative work are within the protection scope of the present application.

As described in the background art, the leaky cable in the related art has the problem of poor structural stability of the outer conductor layer. After researches, the applicant has found that the reason for this problem is that, the outer conductor layer in the related art is usually a copper strip, which is bent along the circumference of the insulating layer and longitudinally cladded on the outside of the insulating layer, the copper strip is partially overlapped, and the outer sheath is cladded on the outside of the copper strip to fix the copper strip. However, due to the smooth surface of the copper strip, after the outer sheath is peel off, the exposed copper strip is prone to loosening, resulting in a reduced structural stability of the copper strip.

In view of the above technical problems, an example of the present application provides a leaky cable, wherein the first connecting portion is provided with a first knurling by rolling and the second connecting portion is provided with a second knurling by rolling, through such an arrangement, the first knurling and the second knurling are at least partially fitted after the outer conductor layer is longitudinally cladded on the insulating layer, so that the first connecting portion and the second connecting portion are not easy to separate from each other; the first knurling and the second knurling which are fitted with each other could increase the friction force of the first connecting portion and the second connecting portion at the overlap position, so that the outer conductive layer is not easy to loosen after the outer sheath is peeled off, thus the structural stability of the outer conductor layer is improved. In addition, since the third knurling rolled on the slot portion is different from the first knurling and the second knurling in terms of knurling patterns, the bending performance of the first connecting portion and the bending performance of the second connecting portion are smaller than the bending performance of the slot portion, so that the circumferential torsional deformation of the leaky cable during the laying process is avoided, further allowing the outer conductor layer to form a relatively stable structure.

The principles and features of the examples of the present application are described below in conjunction with the accompanying drawings. The examples as set forth are only used to explain the embodiments of the present application, and are not used to limit the scope of the examples of the present application.

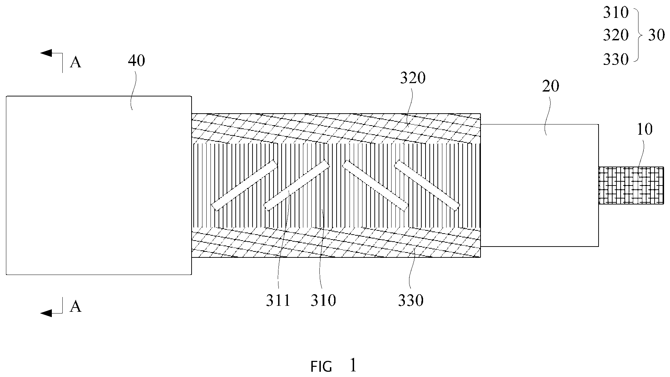

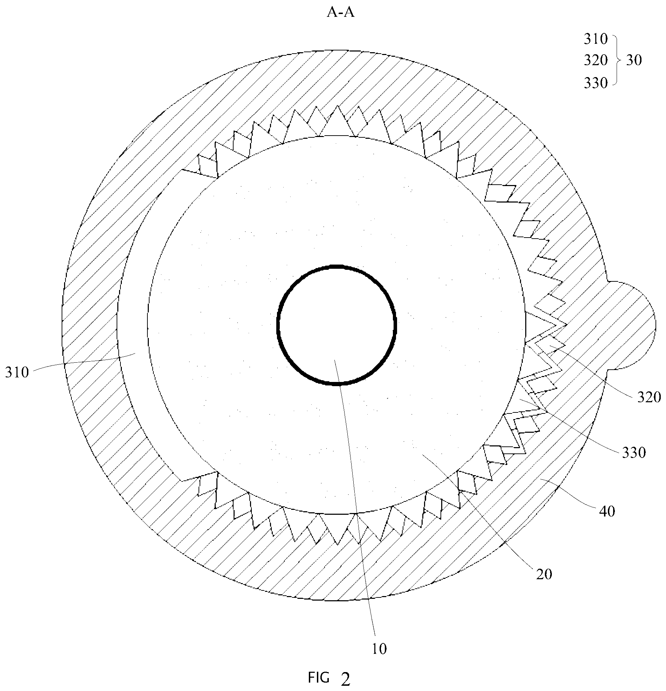

With reference to FIG. 1 and FIG. 2, the present example provides a leaky cable, comprising an inner conductor 10, an insulating layer 20, an outer conductor layer 30 and an outer sheath 40, wherein the inner conductor 10 may include a smooth copper tube, a spiral copper tube, a copper-cladded aluminum tube, etc. The insulating layer 20 may include a foaming layer, and the foaming layer is cladded around the inner conductor 10. The outer conductor layer 30 may include a copper strip or an aluminum strip, and the outer conductor layer 30 is longitudinally cladded on the outside of the insulating layer 20. The outer sheath 40 is wrapped around the outside of the outer conductor layer 30.

Wherein, the outer conductor layer 30 includes a slot portion 310, a first connecting portion 320 and a second connecting portion 330, and the first connecting portion 320, the slot portion 310 and the second connecting portion 330 are sequentially arranged along the circumference of the leaky cable.

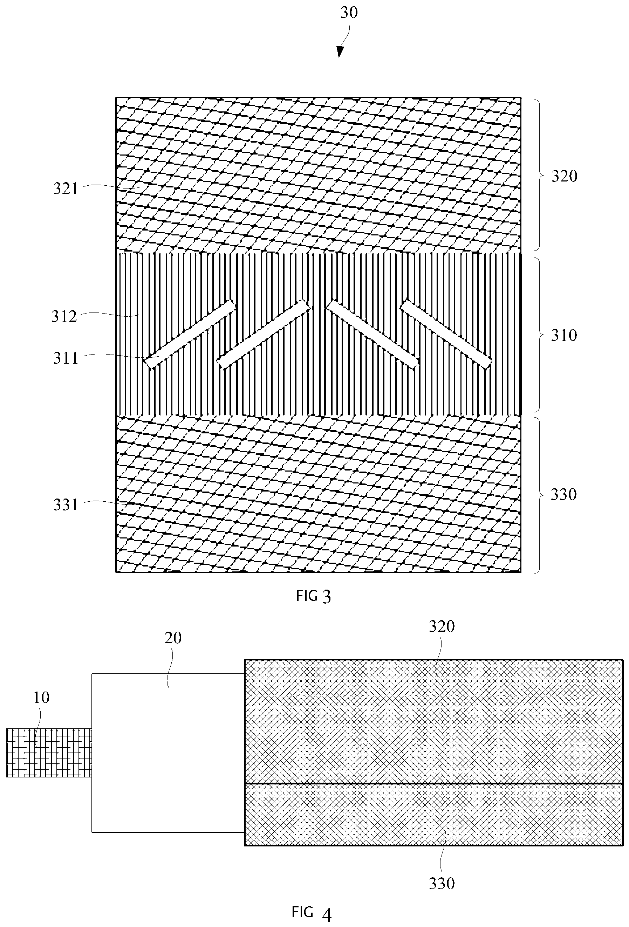

The slot portion 310, the first connecting portion 320 and the second connecting portion 330 are integrally arranged. Referring to FIG. 3, when the outer conductor layer 30 has not been longitudinally cladded around the outside of the insulating layer 20, the outer conductor layer 30 is in a plate shape.

The slot portion 310 is provided with slots 311, and the signal of the leaky cable is mainly emitted through the slots 311. When laying the leaky cable, the slots 311 of the leaky cable are required to be laid in front of the user.

The first connecting portion 320 and the second connecting portion 330 are respectively located at the two circumferential ends of the slot portion 310. The first connecting portion 320 is provided with a first knurling 321 by rolling and the second connecting portion 330 is provided with a second knurling 331 by rolling. The first knurling 321 may include at least one of a crossed knurling, a herringbone knurling, and a star-shape knurling. The second knurling 331 may also include at least one of a crossed knurling, a herringbone knurling, and a star-shape knurling. The first knurling 321 on the first connecting portion 320 and the second knurling 331 on the second connecting portion 330 may be formed by rolling with a knurling tool on the first connecting portion 320 and the second connecting portion 330 on a turning lathe. Since the outer conductor layer 30 is usually very thin, both sides of the first connecting portion 320 and the second connecting portion 330 will be squeezed with knurling patterns.

After the outer conductor layer 30 is longitudinally cladded outside the insulating layer 20, the first connecting portion 320, the slot portion 310 and the second connecting portion 330 are arranged in a tubular shape, and the first connecting portion 320 and the second connecting portion 330 are at least partially overlapped and fitted with each other. Referring to FIG. 2 and FIG. 4, in the fitted portions, the first knurling 321 on the first connecting portion 320 corresponds to the second knurling 331 on the second connecting portion 330, that is, the crest of the first knurling 321 corresponds to the crest of the second knurling 331, and the trough of the first knurling 321 corresponds to the trough of the second knurling 331, so that the crossed knurling positions of the first knurling 321 and the second knurling 331 are overlapped, which function to clamp the first connecting portion 320 and the second connecting portion 330, so that the first connecting portion 320 and the second connecting portion 330 are not prone to loosening or separating after overlapping and the structural stability of the outer conductor layer 30 is improved.

In addition, compared with the overlap of the first connecting portion 320 and the second connecting portion 330 which are smooth, the first knurling 321 and the second knurling 331 can increase the friction force of the first connecting portion 320 and the second connecting portion 330 at the overlap position, so that the outer conductor layer 30 is not easy to loosen after the outer sheath 40 is peeled off, and the structural stability of the outer conductor layer 30 is improved.

In addition to increasing the friction force of the first connecting portion 320 and the second connecting portion 330 at the overlap position, the first knurling 321 and the second knurling 331 can also improve the bending performances of the first connecting portion 320 and the second connecting portion 330, so as to facilitate the arrangement of the leaky cable.

In some examples, the first knurling 321 and the second knurling 331 may have the same knurling patterns, that is, the first knurling 321 and the second knurling 331 may be formed by rolling with the same knurling tool. When the first knurling 321 and the second knurling 331 have the same knurling pattern, the outer conductor layer 30 is applicable to being longitudinally cladded on insulating layers of various specifications, thereby increasing the specification range of leaky cables to which the outer conductor layer 30 is applicable. At the same time, the processing of the outer conductor layer 30 is facilitated by forming the first knurling 321 and the second knurling 331 through rolling with the same knurling tool.

In other examples, the first knurling 321 and the second knurling 331 have the same knurling pattern in the fitted area of the first connecting portion 320 and the second connecting portion 330, while the first knurling 321 and the second knurling 331 have different knurling pattern outside the fitted area. In such an arrangement, the first knurling 321 corresponds to the second knurling 331 only in the fitted area, and the first knurling 321 and the second knurling 331 outside the fitted area can be set as needed, so the flexibility of knurling arrangement on the outer conductor layer 30 is improved.

The slot portion 310 may also be provided with a plurality of third knurling 312. The third knurling 312 is different from the first knurling 321 and the second knurling 331 in terms of knurling pattern, so that the bending performance of the slot portion 310 is greater than the bending performance of the first connecting portion 320, and the bending performance of the slot portion 310 is greater than the bending performance of the second connecting portion 330. In the process of laying the leaky cable, the circumferential torsional deformation of the leaky cable can be avoided when the bending performances of the first connecting portion 320 and the second connecting portion 330 are smaller than the bending performance of the slot portion 310, so that a relatively stable structure of the outer conductor layer 30 can be formed. After the leaky cable is laid in the indoor scene, the field strength coverage of the leaky cable is in a band shape along the direction of the leaky cable, which is uniform and stable and has no obvious changes in strength. The signal is stable and uniform, which can ensure that mobile phones in all areas of the application scenario are unobstructed, providing convenience for people's daily life, and SOS messages can be sent out in emergency situations.

Specifically, referring to FIG. 1 and FIG. 3, in some examples, the third knurling 312 is in an elongated strip shape and extends along the circumference of the leaky cable. The plurality of third knurling 312 is arranged in sequence along the axial direction of the leaky cable. Due to the plurality of third knurling 312 extending along the circumference of the leaky cable, the slot portion 310 can be easily squeezed or stretched, thereby reducing the bending radius of the leaky cable, facilitating packaging and transportation, and reducing the difficulty of construction. It can be used in some occasions where the bending radius of the leaky cable is required to be smaller and facilitates the layout of the leaky cable.

In some specific implementations, the third knurling 312 may include a V-shaped knurling, a wavy knurling, or other knurling extending along the circumference of the leaky cable, wherein the V-shaped knurling has a groove shape and extends along the circumference of the leaky cable, and the longitudinal section of the V-shaped knurling, which is a section parallel to the axial direction of the leaky cable, has a V shape. Due to the V-shaped knurling, the outer conductor layer 30 can be bent more easily in the direction in which the slot portion 310 is squeezed or stretched, thereby improving the bending performance of the slot portion 310.

The wavy knurling is in a groove shape and is similar to the V-shaped knurling in shape, except that the wavy knurling extends in a wavy shape in the section parallel to the axial direction of the leaky cable. Due to the wavy knurling, the outer conductor layer 30 can be bent more easily in the direction in which the slot portion 310 is squeezed or stretched, thereby improving the bending performance of the slot portion 310.

Moreover, after the slots 311 are opened on the slot portion 310, the third knurling 312 can avoid the influence of the slots 311 on the bending performance of the leaky cable.

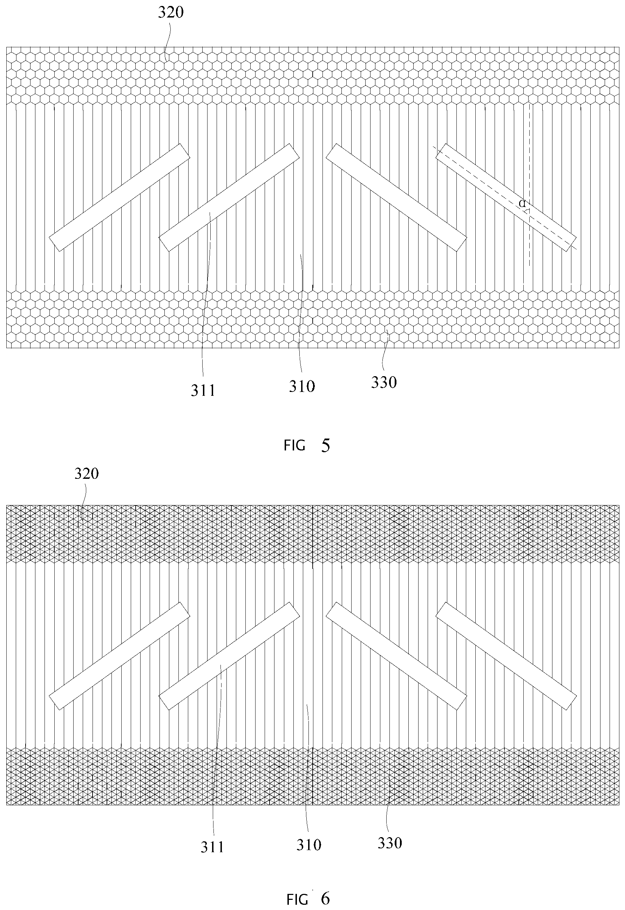

Furthermore, the first knurling 321 can have a crossed knurling pattern. As an example, the first knurling 321 can include a crossed knurling (referring to FIGS. 1, 3 and 4), a herringbone knurling (referring to FIG. 5) or a star-shape knurling (referring to FIG. 6), etc., wherein, the knurling patterns of the crossed knurling are crossed to form a mesh shape, the knurling patterns of the herringbone knurling are generally arranged in a crossed herringbone shape, and the knurling patterns of the star-shape knurling are generally arranged in a crossed star shape. Compared with the slot portion 310 rolled with a plurality of third knurling 312, the first knurling 321 arranged in a crossed shape make the bending performances of the first connecting portion 320 and the second connecting portion 330 smaller than the bending performance of the slot portion 310. In the process of laying the leaky cable, the circumferential torsional deformation of the leaky cable can be avoided when the bending performances of the first connecting portion 320 and the second connecting portion 330 are smaller than the bending performance of the slot portion 310, so that a relatively stable structure of the outer conductor layer 30 can be formed and after the leaky cable is laid in the indoor scene, the field strength coverage of the leaky cable is in a band shape along the direction of the leaky cable, which is uniform and stable and has no obvious changes in strength. The signal is stable and uniform, which can ensure that mobile phones in all areas on the application scenario are unobstructed, providing convenience for people's daily life, and SOS messages can be sent out in emergency situations.

The circumferential torsional deformation of the leaky cable can be avoided when the bending performances of the first connecting portion 320 and the second connecting portion 330 are smaller than the bending performance of the slot portion 310. This advantage can also improve the convenience during construction.

In some examples, the outer conductor layer 30 may include an aluminum strip. The cost of aluminum is lower than the cost of copper. Using an aluminum strip as the outer conductor layer 30 can reduce the overall cost and construction cost of the leaky cable, and reduce the situations that the price of cable is increased due to fluctuations in the cost of raw materials.

Secondly, since the density of the aluminum strip is lower than the density of the copper strip, the aluminum strip is lighter in weight when the aluminum strip and the copper strip have the same volume, which facilitates the layout of the leaky cable.

Furthermore, the side of the aluminum strip facing the insulating layer 20 and/or the side of the aluminum strip away from the insulating layer 20 can be coated with a conductive layer. The conductive layer can be coated on the side of the aluminum strip facing the insulating layer 20, and/or the side away from the insulating layer 20. The conductive layer can improve the conductivity of the outer conductor layer 30, thereby improving the signal transmission quality of the leaky cable.

In some specific implementations, the conductive layer may include a graphene layer or a copper layer, the graphene layer may be adhered to the surface of the aluminum strip by spraying, and the copper layer may be adhered to the surface of the aluminum strip by electroplating.

In other specific implementations, the conductive layer may include a graphene layer and a copper layer, both of which are coated on the surface of the aluminum strip, that is, the graphene layer and the copper layer do not overlap, for example, the graphene layer may be coated on one side of the aluminum strip, and the copper layer may be coated on the other side of the aluminum strip; or one side of the aluminum strip may be coated with a graphene layer or a copper layer, and a partial area on the other side of the aluminum strip is coated with a graphene layer, another partial area on the other side of the aluminum strip is coated with a copper layer, so as to meet different signal transmission requirements.

Furthermore, the copper layer is coated on two axial ends of the aluminum strip, and the intermodulation performance of the leaky cable can be improved after the two ends of the leaky cable are electrically connected to the connector.

In some examples, the slot 311 provided on the slot portion 310 may be in an elongated strip shape, and there is an included angle α between the extending direction of the slot 311 and the extending direction of the third knurling 312. After the slot portion 310 is compressed along the squeezing direction of the third knurling 312, the inclined slot 311 may reduce the shrinkage degree of the opening of the slot 311, thereby making the signal of the leaky cable more uniform and improving the signal transmission quality of the leaky cable.

In some examples, along the circumference of the leaky cable, there is a first preset interval between an end of the slot 311 close to the first connecting portion 320 and the first connecting portion 320, and there is a second preset interval between an end of the slot 311 close to the second connecting portion 330 and the second connecting portion 330. The first preset interval and the second preset interval may be equal or unequal. When the outer conductor layer 30 is longitudinally cladded on the insulating layer 20, if the first knurling 321 on the first connecting portion 320 and the second connecting portion 330 is crimped, the outer conductor layer 30 around the first knurling 321 will be easily pulled. If the slot 311 is too close to the first connecting portion 320 and the second connecting portion 330, the slot 311 will deform when being pulled. Therefore, the arrangement of the first preset interval between the end of the slot 311 close to the first connecting portion 320 and the first connecting portion 320 and the second preset interval between the end of the slot 311 close to the second connecting portion 330 and the second connecting portion 330 can prevent the slot 311 from deforming when being pulled when the outer conductor layer 30 is longitudinally cladded on the insulating layer 20, so that the slot 311 can transmit signals normally, thereby making the signal of the leaky cable more uniform and improving the signal transmission quality of the leaky cable. In addition, in the process of laying the leaky cable, the circumferential torsional deformation of the leaky cable can be avoided when the bending performances of the first connecting portion 320 and the second connecting portion 330 are smaller than the bending performance of the slot portion 310, so that a relatively stable structure of the outer conductor layer 30 can be formed and after the leaky cable is laid in the indoor scene, the field strength coverage of the leaky cable is in a band shape along the direction of the leaky cable, which is uniform and stable and has no obvious changes in strength. Thus the signal is stable and uniform, which can ensure that mobile phones in all areas of the application scenario are unobstructed, providing convenience for people's daily life, and SOS messages can be sent out in time in emergency situations.

The leaky cable in this example comprises an inner conductor 10, an insulating layer 20, an outer conductor layer 30 and an outer sheath 40, wherein the inner conductor 10, the insulating layer 20, the outer conductor layer 30 and the outer sheath 40 are arranged in sequence from the inside to the outside; the outer conductor layer 30 includes a slot portion 310, a first connecting portion 320 and a second connecting portion 330, wherein the first connecting portion 320, the slot portion 310 and the second connecting portion 330 are arranged in sequence along the circumference of the leaky cable. The slot portion 310 is provided with slots 311, the first connecting portion 320 is provided with a first knurling 321 by rolling, and the second connecting portion 330 is provided with a second knurling 331 by rolling. The first connecting portion 320, the slot portion 310 and the second connecting portion 330 are connected in sequence along the circumference of the leaky cable and wound in a tubular shape. The first connecting portion 320 and the second connecting portion 330 are at least partially fitted, and in the fitted areas, the crest of the first knurling 321 corresponds to the crest of the second knurling 331, and the trough of the first knurling 321 corresponds to the trough of the second knurling 331, which function to clamp the first connecting portion 320 and the second connecting portion 330, so that the first connecting portion 320 and the second connecting portion 330 are not prone to loosening or separating after overlapping, so as to improve the structural stability of the outer conductor layer 30. In addition, compared with the overlap of the first connecting portion 320 and the second connecting portion 330 which are smooth, the first knurling 321 and the second knurling 331 can increase the friction force of the first connecting portion 320 and the second connecting portion 330 at the overlap position, so that the outer conductor layer 30 is not easy to loosen after the outer sheath 40 is peeled off, and the structural stability of the outer conductor layer 30 is improved.

Finally, it should be noted that the above examples are only used to illustrate the technical solutions of the present application, rather than to limit it. Although the present application has been described in detail with reference to the aforementioned examples, those of ordinary skill in the art should understand that they can still modify the technical solutions described in the aforementioned examples, or make equivalent replacements for some or all of the technical features therein. However, these modifications or replacements do not make the essence of the corresponding technical solutions deviate from the scope of the technical solutions of the examples of the present application.

## Claims

1. A leaky cable, comprising an inner conductor, an insulating layer, an outer conductor layer and an outer sheath, wherein the inner conductor, the insulating layer, the outer conductor layer and the outer sheath are arranged in sequence from the inside to the outside;
the outer conductor layer includes a slot portion, a first connecting portion and a second connecting portion; the slot portion, the first connecting portion and the second connecting portion are integrally provided, the first connecting portion, the slot portion and the second connecting portion are sequentially connected along the circumference of the leaky cable and wound into a tubular shape, so as to be jointly arranged outside the insulating layer; the slot portion is provided with slots, the first connecting portion is provided with a first knurling by rolling and the second connecting portion is provided with a second knurling by rolling; the first connecting portion and the second connecting portion are at least partially fitted, and in the fitted areas, the crest of the first knurling corresponds to the crest of the second knurling, and the trough of the first knurling corresponds to the trough of the second knurling;
the slot portion is provided with a plurality of third knurling by rolling, and the third knurling is different from the first knurling and the second knurling in terms of knurling pattern, so that the bending performance of the slot portion is greater than the bending performance of the first connecting portion, and the bending performance of the slot portion is greater than the bending performance of the second connecting portion.

2. The leaky cable according to claim 1, **characterized in that**, the first knurling and the second knurling have the same knurling pattern.

3. The leaky cable according to claim 1, **characterized in that**, the first knurling and the second knurling are both in crossed knurling, and the third knurling is in an elongated strip shape; the third knurling extends along the circumference of the leaky cable, and the plurality of third knurling are arranged in sequence along the axial direction of the leaky cable.

4. The leaky cable according to claim 3, **characterized in that**, the first knurling includes at least one of a crossed knurling, a herringbone knurling, and a star-shape knurling;
the second knurling includes at least one of a crossed knurling, a herringbone knurling, and a star-shape knurling; and
the section of the third knurling parallel to the axial direction of the leaky cable is V-shaped and/or wave-shaped.

5. The leaky cable according to any of claims 1-4, **characterized in that**, the outer conductor layer includes an aluminum strip, which is formed by the slot portion, the first connecting portion, and the second connecting portion.

6. The leaky cable according to claim 5, **characterized in that**, a conductive layer is coated on the side of the aluminum strip facing the insulating layer and/or the side of the aluminum strip facing away from the insulating layer.

7. The leaky cable according to claim 6, **characterized in that**, the conductive layer includes a graphene layer and/or a copper layer.

8. The leaky cable according to claim 6, **characterized in that**, the conductive layer includes a graphene layer and a copper layer, and the graphene layer and the copper layer are both coated on the surface of the aluminum strip.

9. The leaky cable according to claim 8, **characterized in that**, the copper layer is coated on two axial ends of the aluminum strip.

10. The leaky cable according to claim 1, **characterized in that**, the slot is in an elongated strip shape, and there is an included angle between the extending direction of the slot and the extending direction of the third knurling.

11. The leaky cable according to claim 10, **characterized in that**, along the circumference of the leaky cable, there is a first preset interval between an end of the slot close to the first connecting portion and the first connecting portion; there is a second preset interval between an end of the slot close to the second connecting portion and the second connecting portion.
